# EUROPEAN PATENT APPLICATION

(11) **EP 4 667 901 A1**
(43) Date of publication of application: **24.12.2025**
(21) Application number: 25181174.1
(22) Date of filing: 05.06.2025
(51) Int. Cl.: G01N 3/46, G01N 3/56

(54) **SYSTEM FOR TESTING THE ABRASION RESISTANCE OF A GLAZED CERAMIC TILE**

(30) Priority: 19.06.2024 IT 202400014008
(71) Applicant: Marazzi Group Srl, 41049 Sassuolo (IT)
(72) Inventor: RIGHI, Fabio, 41049 Sassuolo (IT); LUSETTI, Beatrice, 41049 Sassuolo (IT)
(74) Representative: Unilin Technologies

(57) **Abstract**

System for testing the abrasion resistance of a glazed ceramic tile comprising :
- a base unit for holding a glazed ceramic tile;
- a head unit, adapted to hold an insert piece;
wherein said system is configured to move at least one between said base unit and said head unit to make said insert piece contact said glazed ceramic tile, characterized in that said head unit comprises an insert fastener and wherein said insert piece is removably held by said insert fastener.

## Description

The present invention relates to a system for testing the abrasion resistance of a glazed ceramic tile and to a method for testing the abrasion resistance of a glazed ceramic tile.

More particularly, the present invention relates to a system for testing the abrasion resistance of a glazed ceramic tile, wherein said system comprises a base unit for holding said glazed ceramic tile, and wherein said system comprises a head unit adapted to hold an insert piece, wherein said system is configured to move at least one between said base unit and said head unit to make said insert piece contact said glazed ceramic tile. Such system is known e.g. as an abrasion tester or an abrasimeter suitable for carrying out P.E.I. (Porcelain Enamel Institute of America) method tests according to the UNI EN ISO 10545-7 norm. This test is an industry-standard test used for classifying tiles based on their suitability for different applications and levels of foot traffic. The test involves using an abrasion tester for exposing the surface of a glazed ceramic tile to the abrasive action of steel ball bearings comprised within a unit, with the addition of corundum and distilled water, for a given number of rotations.

While said test and the corresponding system are able to provide a relative indication of the abrasion resistance of a glazed ceramic tile, said test does not provide a very accurate simulation of daily use and ordinary circumstances which would cause abrasion of the surface of said glazed ceramic tile in an environment where such glazed ceramic tiles would normally be used, e.g. residential spaces, office spaces, commercial spaces. Examples of such circumstances are the movement and/or scraping of chair legs, table legs, furniture legs, dirt, sand and the like onto the surface of said glazed ceramic tiles.

The present invention in the first place aims at an alternative system for testing the abrasion resistance of a glazed ceramic tile, wherein in accordance with preferred embodiments, solutions are offered for one or more of the problems with the state of the art.

The present invention can be particularly useful as a system for assessing whether a glazed ceramic tile is suitable for use in residential and/or office and/or commercial spaces Further, the present invention can be useful for assessing the quality of one or more production steps in the manufacturing process of a glazed ceramic tile.

With this aim, the present invention, in accordance with its first aspect is a system for testing the abrasion resistance of a glazed ceramic tile, comprising a base unit for holding a glazed ceramic tile, and a head unit, adapted to hold an insert piece, wherein said system is configured to move at least one between said base unit and said head unit to make said insert piece contact said glazed ceramic tile, with as a characteristic that said head unit comprises an insert fastener and wherein said insert piece is removably held by said insert fastener.

Said insert fastener can be any sort of clamping and/or fastening mechanism, such as a C-clamp with a screw mechanism, a quick-release clamp, a toggle clamp, a spring clamp, a magnetic clamp, a vacuum clamp, bolt and nut connection or any other mechanism which can be used for removably holding an insert piece.

By removably holding said insert piece, the advantage is achieved that said insert piece can be easily removed for replacement and/or cleaning and/or maintenance. This can be particularly useful if said system is used for testing the abrasion resistance of a glazed ceramic tile under a plurality of testing conditions, wherein one testing condition can require a different type of insert piece to be used in said system.

Preferably said base unit is moveable with respect to said head unit by means of a numerically controlled motor at least along a first horizontal axis.

Said numerically controlled motor can be a linear motor and/or any type of motor system for which the frequency and rotational direction of said motor can be controlled, for example a stepper motor, a servomotor, a controlled induction motor for example by means of a frequency drive, a controlled direct current motor, a controlled electrostatic motor, a controlled hydraulic motor, a controlled pneumatic motor.

Because said base unit is moveable with respect to said head unit along a first horizontal axis, a linear movement of said base unit and therefore of said glazed ceramic tile relative to said head unit can be achieved. A linear movement can provide a better simulation of situations that would occur in residential and/or office and/or commercial spaces wherein said glazed ceramic tile is subject to abrasion, such as the movement and/or scraping of chair legs, table legs, furniture legs, dirt, sand and the like, onto the surface of said glazed ceramic tiles.

It is preferred that said base unit is moveable with respect to said head unit along a second horizontal axis, said second horizontal axis being perpendicular to said first horizontal axis.

By providing a second horizontal axis along which said base unit is moveable, an increased amount of customizable movements can be executed, in order to better simulate conditions to which said glazed ceramic tile may be subjected to during its lifetime. Moveability along said second horizontal axis can improve the ergonomics for the operator of the machine, for example when providing a glazed ceramic tile onto said base unit. Said base unit can be moveable along said second horizontal axis by the same means as for the first horizontal axis. It can also be the case that said base unit is moveable along said second horizontal axis by means of a manual operation.

Alternatively, it could be that said head unit is moveable with respect to said base unit along a first and/or second horizontal axis, by the same means as in the case that said base unit is moveable with respect to said head unit.

It is preferred that a position of said base unit on said second horizontal axis can be fixed by means of a fastening mechanism and/or a pneumatically and/or an electronically controlled system.

Preferably said base unit comprises a bed and one or more clamping and/or fastening mechanisms, which are configured to allow the fixation of a glazed ceramic tile. Examples of said mechanisms include a C-clamp with a screw mechanism, a quick-release clamp, a toggle clamp, a spring clamp, a magnetic clamp, a vacuum clamp, bolt and nut connection or any other mechanism which can be used for removably holding a glazed ceramic tile. It is also possible that a plurality of glazed ceramic tiles are fixed onto said bed. For example two or more glazed ceramic tiles which are connected to each other by means of a grout connection.

It is preferred that the displacement and/or frequency and/or speed and/or acceleration of a movement of said base unit is digitally and/or analogously controlled. By having a controlled displacement and/or frequency of the movement of said base unit, testing results for different glazed ceramic tiles, obtained by using the system of the present invention, can be compared to each other, since the same or mostly the same testing parameters were used during a test performed with the system of the present invention. Being able to control the displacement and/or frequency of the movement of said base unit provides the opportunity to customize the movements of said base unit to better fit the intended simulation of conditions to which said glazed ceramic tile would be subjected to during its life time.

Preferably said motor is connected to a gearing system wherein said gearing system enables a speed reduction of said motor. It is preferred that said gearing system comprises a speed reduction factor or gear ratio, wherein said gear ratio is defined as the ratio of the rotational speed of the motor shaft and the rotational speed at the end of the gear system, of between 1 and 100, preferably between 20 and 90, more preferably between 40 and 90, for example around 80.

The displacement and/or frequency of the movement of said base unit can for example be controlled by mechanical adjustments such as changing the length of a lever arm connected to said base unit, adjusting the position of a cam or crankshaft attached to said base unit or altering a gear ratio.

The displacement and/or frequency of the movement of said base unit can also for example be controlled by actuators, such as hydraulic cylinders, pneumatic cylinders or electric motors. By adjusting the input to these actuators, either through changes in pressure, voltage, or other control signals, the displacement and/or frequency of the movement of said base unit can be controlled.

In the case that said head unit is movable with respect to said base unit, it is preferred that the displacement and/or frequency of a movement of said head unit is digitally and/or analogously controlled in the same manner and/or with the same means as described in the context of said base unit being movable with respect to said head unit.

In a preferred embodiment said base unit is movable with respect to said head unit by means of a belt driven mechanism. In this embodiment, said base unit is directly or indirectly connected to a belt, said belt being directly or indirectly, for example through a pulley which is connected to a gear system, connected to a motor. The direction and speed of the movement is controlled by controlling the rotation direction and rotation speed of said motor.

Preferably said movement is a back and forth linear movement and said movement has a positive maximum displacement and an equal negative maximum displacement which is in the opposite direction of said positive maximum displacement. In a preferred embodiment, both said positive and said negative maximum displacement are within a range of between 1 to 2000 mm, preferably between 1 and 1500 mm, more preferably between 1 and 750 mm, even more preferably between 1 and 150 mm, for example around 50 mm.

It is preferred that said movement has a movement speed which is smaller than 0,5 m/s, preferably of between 0,05 and 0,5 m/s, more preferably of between 0,05 and 0,25 m/s.

Preferably a pause between a first movement and a second movement can be provided. The duration of said pause can be set as long as desired by the person carrying out the test.

Preferably said head unit further comprises a load portion, which is configured to be provided with a removable load and wherein said load can be increased and/or decreased. Said removable load preferably comprises one or more weights, for example a weight of 20 kilograms.

Alternatively said removable load can be a hydraulically and/or pneumatically controlled load.

This way the conditions to which said glazed ceramic tile would be subjected to during its life time can be simulated more accurately, for example the movement and/or scraping of chair legs of a chair on which a person is sitting, or the movement and/or scraping of a heavy table.

Said load can be increased and/or decreased as demanded by the intended simulation of certain conditions.

It is preferred that said head unit is moveable with respect to said base unit along a vertical axis. This way, since the insert piece is connected to said head unit by means of an insert fastener, the height of said insert piece with respect to said base unit, and therefore with respect to said glazed ceramic tile, can be controlled. Said insert piece can then be moved into a non-contact position, in which said insert piece and said glazed ceramic tile do not contact each other. Said insert piece can also be moved into a touching position, in which said insert piece and said glazed ceramic tile contact each other directly and/or indirectly without the removable load of the load portion connected to the head unit being transferred onto said glazed ceramic tile. Said insert piece can also be moved into a contact position, in which said insert piece and said glazed ceramic tile contact each other directly and/or indirectly, and wherein the removable load is at least partially transferred through the insert piece onto the glazed ceramic tile.

Preferably, said head unit is moveable along said vertical axis by means of a digitally and/or analogously controlled motor. Said head unit can also be moveable along said vertical axis by a lifting actuator, for example a pneumatic and/or hydraulic cylinder system.

Preferably a position of said head unit can be fixed along said vertical axis by means of a fastening mechanism and/or a pneumatically and/or electronically and/or hydraulically controlled system.

In a preferred embodiment, said non-contact position and/or said touching position and/or said contact position can be achieved by means of a pneumatic and/or hydraulic cylinder system and/or a digitally and/or analogously controlled motor and/or a fastening mechanism.

In a preferred embodiment, the system comprises a dosing unit, comprising a material inlet which is configured to store and provide an amount of abrasive material.

It is preferred that said dosing unit further comprises a dosing channel, through which said abrasive material is transported and a dosing outlet, through which said abrasive material is ejected. Said dosing outlet is preferably connected to said dosing channel and said dosing channel is preferably situated in between said material inlet and said material outlet.

It is preferred that said dosing outlet has an entrance in which the abrasion material is coming in and an exit from which the abrasion material is coming out. Preferably said exit is wider than said entrance, for example said dosing outlet is coat hanger-shaped. Providing said dosing outlet with a geometry as such can result in a more uniform flow rate at the exit of said dosing outlet.

The abrasive material which is ejected through said dosing outlet, is preferably provided onto said glazed ceramic tile, even more preferably between said glazed ceramic tile and said insert piece. Said abrasive material can for example be provided on said glazed ceramic tile through said dosing outlet, before said insert piece is moved into a touching or contact position with respect to said glazed ceramic tile.

It should be noted that in the case abrasive material is present in between said insert piece and said glazed ceramic tile, said abrasive material can be pressed into said insert piece and/or into said glazed ceramic tile.

Preferably said dosing channel comprises a flexible and/or pliable portion. Said flexible and/or pliable portion can facilitate the positioning of said dosing outlet, with respect to the glazed ceramic tile.

In a preferred embodiment said dosing unit comprises a valve assembly between said material inlet and said dosing outlet. Said valve assembly is able to control the flow of the abrasive material. For example, the valve assembly can comprise a pneumatic valve or a solenoid valve or any other suitable valve system known or later discovered. The valve assembly can control stop and start of the flow of said abrasive material. It is preferred that said valve assembly is situated between said material inlet and said dosing channel.

Preferably said valve assembly is pneumatically and/or electronically and/or hydraulically controlled.

It is preferred that said abrasive material is provided as a powder. Preferably the time it takes to dispense said powder through said valve assembly can be controlled. In a preferred embodiment, the powder dispensing time is between 0,05 and 0,5 s, preferably between 0,05 and 0,3 s, more preferably around 0,1 s.

It is also preferred that the number of movements before dispensing and/or the number of movements between two dispensing steps can be controlled.

It is preferred that at least a part of said dosing unit is attached to said head unit, more preferably said dosing outlet is connected to said head unit, such that said dosing outlet moves together with said head unit.

In a preferred embodiment, the material inlet of said dosing unit is attached to a portal frame. Said material inlet is connected to a valve assembly, which is connected to a dosing channel comprising a flexible and/or pliable portion.

Preferably said pliable portion can be easily manipulated into different shapes without springing back and wherein an inner diameter of said dosing channel remains significantly constant in any shape of said dosing channel.

Preferably said flexible and/or pliable portion of said dosing channel is able to accommodate for the movement of said dosing outlet.

In a preferred embodiment, said dosing unit comprises a hopper, preferably said material inlet, optionally together with said valve assembly, is a hopper.

In a preferred embodiment, the material of said insert piece has a Mohs hardness which is lower than the Mohs hardness of said abrasive material.

It is preferred that the material of said insert piece has a Mohs hardness which is lower than the Mohs hardness of the material of the surface of said glazed ceramic tile. This way, when assessing the abrasion resistance of a glazed ceramic tile, using the system according to the present invention, the observed abrasion on the glazed ceramic tile, can be significantly attributed to said abrasive material. This feature provides a realistic simulation of the conditions to which said glazed ceramic tile may be subjected to during its lifetime. For example said insert piece can be a wooden insert piece, imitating a chair leg. By using an abrasive material which has a higher hardness than said insert piece, it may be the case that said abrasive material is indented into said insert piece, leading to a specific kind of abrasion on said glazed ceramic tile, when moving said insert piece, optionally with said abrasive material indented into said insert piece and optionally with a load transferred from the head unit through said insert piece, onto said glazed ceramic tile.

Preferably, said abrasive material comprises an aluminosilicate, preferably a feldspar, more preferably a sodium feldspar. Abrasive material used for testing requires a consistent and controlled particle size to ensure reproducibility and accuracy of the test results. Aluminosilicates can for example be ground and sieved to obtain a uniform particle size suitable for standardized abrasion testing procedures. Another advantage of using an aluminosilicate as abrasive material in the system according to the invention is that it is a closer simulation of realistic conditions to which glazed ceramic tiles can be subjected to. Aluminosilicates are commonly found in the Earth's crust and it can be present in certain types of dirt or soil. Said dirt or soil comprising aluminosilicates can be brought into a residential and/or commercial environment in which said glazed ceramic tiles is used, through daily floor traffic such as people coming in and going out of the environment in which said glazed ceramic tile is used.

Preferably, said abrasive material has a grain size of less than 0.50 mm, preferably less than 0.15 mm.

Preferably, said abrasive material has a Mohs hardness of between 5.5 and 7.

It is preferred that said abrasive material is essentially free of any lubricants. The use of lubricants in the system according to the present invention can give a biased view of the actual abrasion resistance of the glazed ceramic tile. Since said lubricants may form a film between the abrasive and the glazed ceramic tile during abrasive action, it may be the case that a higher abrasion resistance of said glazed ceramic tile is perceived than would be the case if no lubricant was used. Examples of lubricants include, but are not limited to water, glycerol, mineral oils, synthetic oils, surfactant solutions.

In one preferred embodiment, the system of the invention is comprised within a conditioned space, for example a climate cabinet, wherein the temperature and/or humidity can be controlled. This way environmental factors relating to where said glazed ceramic tiles can be used, can be taken into account. Testing can then be performed simulating the environment of a plurality of geographical regions, which can have a significant impact on the eventual abrasion resistance of said glazed ceramic tile.

Preferably said system includes means for exposing said glazed ceramic tile to chemicals, e.g. cleaning agents. Said means for exposing can be integrated with said dosing unit or can be provided separately. Exposure to certain chemicals can affect the durability and appearance of the glazed ceramic tile. Said chemicals should preferably be selected to correspond with chemicals to which a glazed ceramic tile would be subjected to in realistic residential and/or commercial spaces.

Preferably said insert piece is made of wood, preferably beech, or plastic or metal. By using any of these materials a close simulation of for example furniture legs can be attained.

It is preferred that said insert piece comprises a contacting surface which has a surface area of between 1 and 20 square centimeters. By designing said insert piece within these dimensional constraints, a close simulation of for example furniture legs can be attained.

Preferably there is no rolling of the body of the insert piece during a movement of the base unit and the glazed ceramic tile relative to the insert piece. This way a close simulation of the movement of furniture legs onto a glazed ceramic tile can be attained.

Preferably said glazed ceramic tile is a flooring element.

In one embodiment said glazed ceramic tile comprises one of or a combination of the following flooring elements: HPL (high pressure laminate), DPL (direct pressed laminate), CPL (continuous pressed laminate), LVT (luxury vinyl tile), SPC (stone polymer composite), WPC (wood/waterproof polymer composite), ceramic tile, wherein said glazed ceramic tile is provided onto one or a combination of said flooring elements, for example by means of a glue connection. Providing said glazed ceramic tile on top of one or a combination of said flooring elements can be beneficial for providing a combined flooring element comprising coupling means for coupling multiple of said combined flooring elements together.

As already disclosed in the context of the first aspect, the system of the invention is a system for testing the abrasion resistance of a glazed ceramic tile. The invention further relates to a method for carrying out such testing by using the system as described by the first aspect of the present invention.

Therefore the present invention, in accordance with its second aspect relates to a method for testing the abrasion resistance of a glazed ceramic tile, by means of a system, wherein said system is a system in accordance with the first aspect of the invention, said method comprising the step of:
- providing the glazed ceramic tile to the base unit of said system;
- providing an insert piece to the insert fastener of the head unit of said system;
- providing a contact between said contacting surface of said insert piece and a surface of said glazed ceramic tile and/or an abrasive material;
- performing a relative movement between said base unit and said head unit for a first predefined number of movements;
- visual inspection of the upper surface of said glazed ceramic tile after said first predefined number of movements.

It is preferred that after a first visual inspection, an assessment is made of whether abrasion is visible on the upper surface of said glazed ceramic tile. If this is not the case, a second predefined number of movements can be started. After completion of said second predefined number of movements, a second assessment of whether abrasion is visible on the upper surface is made. This sequence can be continued until abrasion is visible. An abrasion resistance class could be attributed to the glazed ceramic tile, depending on the amount of cycles of predefined number of movements said glazed ceramic tile can endure without showing abrasion on its upper surface.

Preferably said method further comprises the step of providing a load to the load portion of the head unit.

Preferably said load is transferred to said contacting surface of said insert piece onto said surface of said glazed ceramic tile and/or onto said abrasive material.

It is preferred that said method further comprises the step of providing said abrasive material to said material inlet of said dosing unit.

Preferably the method further comprises the step of providing said abrasive material through said dosing channel and through said dosing outlet onto a surface of said glazed ceramic tile.

It is preferred that the method comprises the step of setting and controlling one or more testing parameters chosen from the following non-exhaustive list: movement speed, starting speed, time between movements, powder dispensing time, number of movements before powder dispensing, number of movements between two powder dispensing steps, total number of movements per cycle, ambient temperature, ambient humidity.

In a preferred embodiment, the method further comprises the step of exposing said glazed ceramic tile to chemicals, e.g. cleaning agents, in order to test the abrasion resistance of said glazed ceramic tile in the vicinity of certain chemicals to which said glazed ceramic tile would be subjected to in a residential and/or commercial environment.

It is preferred that the method comprises the step of treating the insert piece before each test or before each series of tests. Preferably said treatment involves abrading a surface, provided for contacting said glazed ceramic tile, of said insert piece. Said abrading can be carried out by means of a grinding and/or sanding operation or by using a sandpaper. This carries the advantage that each test or each series of tests is carried out with essentially the same surface for contacting of said insert piece, which leads to more trustworthy results and a higher reproducibility of the test.

It is imaginable that said system and the corresponding method can also be used for assessing the abrasion resistance of other decorative elements e.g. laminate panels, SPC panels, LVT panels, WPC panels, ceramic tiles, natural stone tiles and the like.

With the intention of better showing the characteristics of the invention, herein below, as an example without any limitative character, some preferred embodiments are described, with reference to the accompanying drawings, wherein:
Figure 1 is a perspective drawing representing a system according to the invention;
Figure 2 is a drawing of a side view of the system indicated with arrow II in figure 1;
Figure 3 is a cross-section along the line indicated with III-III in figure 2, though for a variant.

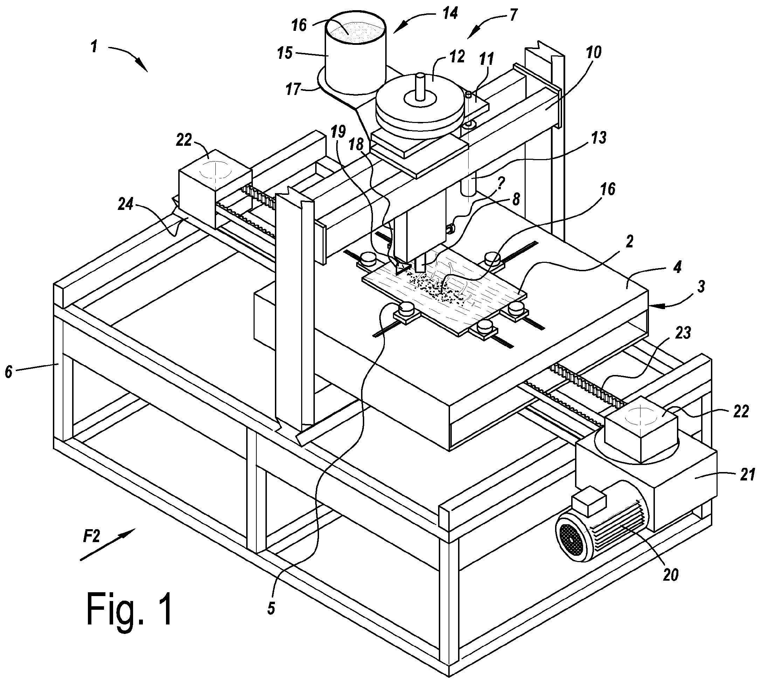

Figure 1 shows an embodiment of the system 1 for testing the abrasion resistance of a glazed ceramic tile 2, comprising a base unit 3 for holding said glazed ceramic tile 2, said base unit 3 comprises a bed 4 and a clamping mechanism 5, which is configured to allow the fixation of a glazed ceramic tile 2. In the embodiment shown in this figure, said clamping mechanism 5 comprises a plurality of slidable clamps which each are movable along a same or different horizontal axis and wherein the position of said clamps can be fixed by fastening the clamp. This clamping mechanism 5 can be used for removably holding a plurality of sizes of glazed ceramic tiles 2.

The system 1 according to the invention comprises a frame 6, which acts as a stable and rigid structure to support the components of the system 1. Said frame 6 can for example be bolted to the ground. The frame 6 further assists in absorbing vibrations generated by the system 1 during operation. Vibrations can have a negative impact on the precision and reliability of the system 1 and lead to increased wear of crucial components of the system 1. In the shown embodiment, the frame 6 consists of steel elements which are connected together with a plurality of bolted and/or weld connections.

The system 1 shown in figure 1 further comprises a head unit 7, adapted to hold an insert piece 8, wherein said system 1 is configured to move the base unit 3 in such a way that said insert piece 8 is able to contact the glazed ceramic tile 2, with as a characteristic that said head unit 7 comprises an insert fastener 9 and wherein said insert piece 8 is removably held by said insert fastener 9.

Said insert fastener 9 can be any sort of clamping and/or fastening mechanism, such as a C-clamp with a screw mechanism, a quick-release clamp, a toggle clamp, a spring clamp, a magnetic clamp, a vacuum clamp, bolt and nut connection or any other mechanism which can be used for removably holding an insert piece 9.

The system of figure 1 further comprises a portal frame 10, which is connected to the frame 6 by means of a bolted connection. Said portal frame 10 is situated in such a way that the base unit 3 is movable through said portal frame 10. Preferably at least a portion of the head unit 7 is movable through a horizontal portion of said portal frame 10.

The head unit further comprises a load portion 11, which is configured to be provided with a removable load 12 and wherein said load 12 can be increased and/or decreased. Said removable load 12 comprises one or more weights 12. In the shown embodiment, two removable weights 12, each weighing around 20 kilograms are provided on said load portion 11.

Said head unit 7 is moveable along a vertical axis by means of a lifting actuator 13, in this case a pneumatic cylinder system 13. Said pneumatic cylinder system 13 as a whole comprises a pneumatic cylinder, one or more pneumatic pipes, one or more controlled valves, a compressed air source and optionally a pressure gauge and/or pressure sensor. The pneumatic pipes for connecting the pneumatic cylinder to a compressed air source, as well as any controlled valve and compressed air source and pressure gauge and/or pressure sensor are not shown in figure 1.

Said insert piece 8 can then be moved into a non-contact position, in which said insert piece 8 and said glazed ceramic tile 2 do not contact each other. Said insert piece 8 can also be moved into a touching position, in which said insert piece 8 and said glazed ceramic tile 2 contact each other directly and/or indirectly without the removable load 12 of the load portion, which is connected to the head unit 7, being transferred onto said glazed ceramic tile 2. Said insert piece 8 can also be moved into a contact position, in which said insert piece 8 and said glazed ceramic tile 2 contact each other directly and/or indirectly, and wherein the removable load 12 is at least partially transferred through the insert piece 8 onto the glazed ceramic tile 2.

In the embodiment shown in figure 1, the insert piece 8 is in a non-contact position with said glazed ceramic tile 2.

Figure 1 further shows that the system 1 comprises a dosing unit 14, comprising a material inlet 15 which is configured to store and provide an amount of abrasive material 16. The abrasive material 16 is a powder, more particularly a sodium feldspar powder. Said dosing unit 14 is attached to the portal frame 10 by means of a support frame 17, for example with a bolted connection.

Said dosing unit 14 further comprises a dosing channel 18, through which said abrasive material 16 can be transported and a dosing outlet 19, through which said abrasive material 16 can be ejected. Said dosing outlet 19 is connected to said dosing channel 18 and said dosing channel 18 is situated in between said material inlet 15 and said dosing outlet 19.

The abrasive material 16 which is ejected through said dosing outlet 19, is provided onto said glazed ceramic tile 2, more particularly between said glazed ceramic tile 2 and said insert piece 8. Said abrasive material 16 is provided on said glazed ceramic tile 2 through said dosing outlet 19, before said insert piece 8 is moved into a touching or contact position with respect to said glazed ceramic tile 2.

The dosing channel 18 is pliable and can be easily manipulated into different shapes without springing back and wherein an inner diameter of said dosing channel 18 remains significantly constant in any shape of said dosing channel 18. This pliability can facilitate the positioning of said dosing outlet 18, with respect to the glazed ceramic tile 2.

The base unit 3 is moveable with respect to said head unit 7 by means of a numerically controlled motor 20 at least along a first horizontal axis.

Said numerically controlled motor 20 can be a linear motor and/or any type of motor system for which the frequency and rotational direction of said motor can be controlled, for example a stepper motor, a servomotor, a controlled induction motor for example by means of a frequency drive, a controlled direct current motor, a controlled electrostatic motor, a controlled hydraulic motor, a controlled pneumatic motor.

Because said base unit 3 is moveable with respect to said head unit 7 along a first horizontal axis, a linear movement of said base unit 3 and therefore of said glazed ceramic tile 2 relative to said head unit 7 can be achieved.

The system 1 shown in figure 1 further comprises a gear system 21 for transmitting motion from the motor shaft, rotating around a horizontal axis, to a pulley 22, rotating around a vertical axis. The gear system 21 as well as the pulley 22 are encased. Examples of gear systems 21 being able to transfer the rotation of the motor shaft to rotation of the pulley are a worm drive, a hypoid drive, a bevel gear system. Note that any system suitable for transmitting motion from a first shaft to a second shaft which is oriented at an angle to the first shaft can be used in the context of the invention.

The base unit 3 is movable with respect to said head unit 7 by means of a belt 23 driven mechanism. The base unit 3 is directly or indirectly connected to a belt 23, this connection is not shown in the figure. Said belt 23 is a toothed belt 23 which is tensioned between a first pulley 22, which is connected to the gear system 21, and a second pulley 22, which is situated on the opposite side of the system 1, with respect to said first pulley 22. Said first and second pulley 22 can for example be a gear or sprocket with a corresponding tooth pitch as the tooth pitch of said toothed belt 23. The direction and speed of the movement of said base unit 3 is controlled by controlling the rotation direction and rotation speed of said motor 20.

The system 1 shown in figure 1 is configured to accommodate for a back and forth linear movement of said base unit 3.

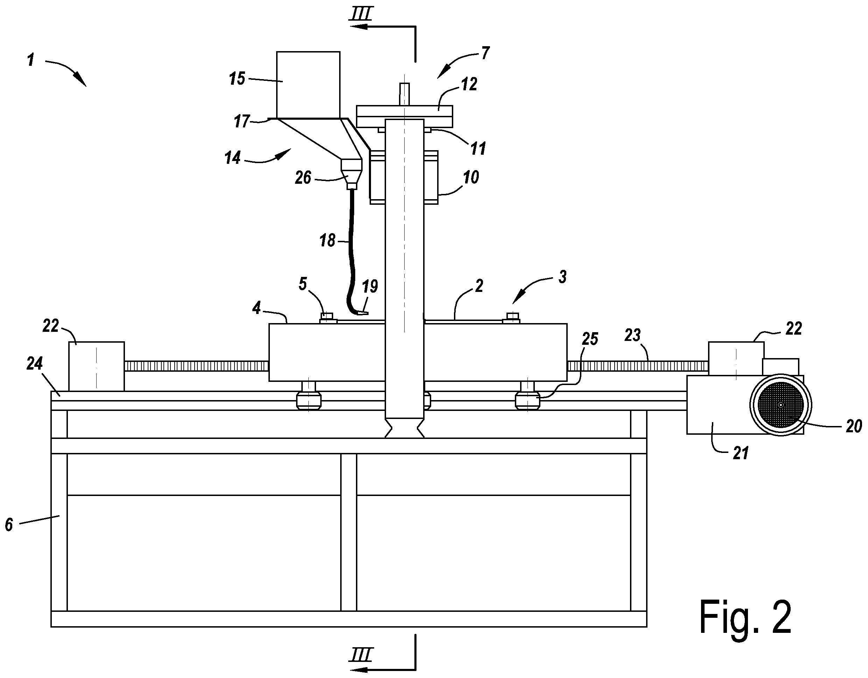

Figure 2 shows a side view of the system 1 shown in figure 1, further clarifying the positions of the respective components of the system 1.

The frame 6 comprises a guiding rail 24 and the base unit 3 comprises a plurality of guiding wheels 25. Said guiding wheels 25 are in contact with said guiding rail 24. Said guiding rail 24 establishes a fixed trajectory for said base unit 3 to follow, ensuring accurate movement and positioning. The guiding rail 24 also supports the weight of said base unit 3 and is able to minimize vibrations during movement, ensuring a smooth, controlled motion.

The base unit 3 comprises a carriage, which is situated under and directly or indirectly fixed to the bed 4 and is connected to the belt 23 for example by means of slots and/or grooves in the carriage where the belt 23 is routed and secured using clamps, bolts or other fasteners. Since the carriage is connected to the belt 23, said carriage and therefore said base unit 3, will move together with said belt 23. Said carriage is not shown in the figures.

Figure 2 shows that the dosing unit 14 comprises a valve assembly 26 between said material inlet 15 and said dosing channel 18. Said valve assembly 26 is able to control the flow of the abrasive material 16. For example, the valve assembly 26 can comprise a pneumatic valve or a solenoid valve or any other suitable valve system known or later discovered. The valve assembly 26 can control stop and start of the flow of said abrasive material 16 and the time it takes to dispense said powder 16 through said valve assembly can be controlled

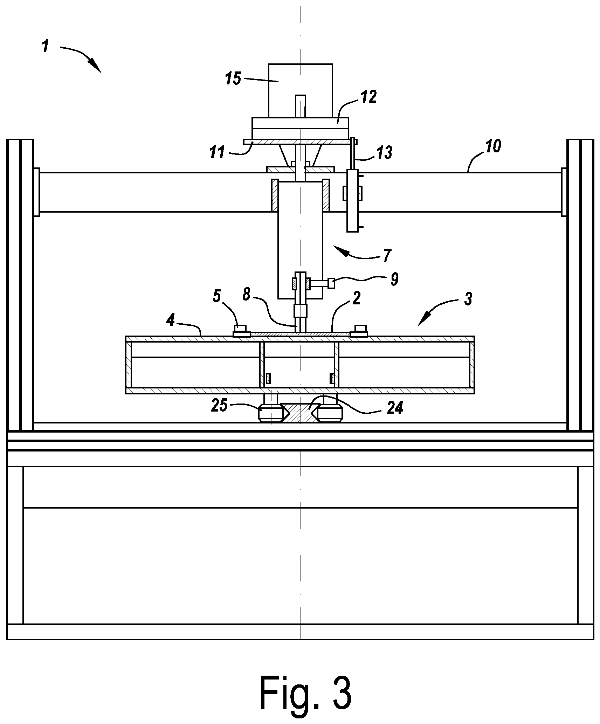

Figure 3 shows a cross-sectional view of the system 1 of figure 1 and 2, but in a contact position, further clarifying how the different components of the system 1 are positioned in relation to each other.

The head unit 7 is moveable along a vertical axis by means of a lifting actuator 13, in this case a pneumatic cylinder system 13. Said pneumatic cylinder system 13 as a whole comprises a pneumatic cylinder, one or more pneumatic pipes, one or more controlled valves, a compressed air source and optionally a pressure gauge and/or pressure sensor. The pneumatic pipes for connecting the pneumatic cylinder to a compressed air source, as well as any controlled valve and compressed air source and pressure gauge and/or pressure sensor are not shown in figure 3.

The lifting actuator 13 is connected to the portal frame 10. In this embodiment only one pneumatic cylinder, comprising a piston, is provided, however it is imaginable that a plurality of pneumatic cylinders are provided within said pneumatic cylinder system 26 in order to distribute the load when lifting the head unit 7 to obtain a touching position or a non-contact position.

As an example, a non-contact position can be obtained by supplying compressed air to the pneumatic cylinder system 26 to extend the piston upwards, said piston being connected to the load portion 11 of the head unit 7.

A touching position can be obtained by collapsing the piston downwards, but still providing compressed air to the pneumatic cylinder system 26, such that the piston still carries the load of said head unit 7.

The contact position can then be obtained by, either directly or slowly, releasing the compressed air from the pneumatic cylinder system 26, in such a way that the load of the head unit 7 is now, either directly or gradually, transferred onto the glazed ceramic tile 2.

It should be noted that said load of said head unit 7 includes the weight of the removable load 12 and the sum of the weight of the individual components of said head unit 7.

Figure 3 further shows how the insert piece is provided into the head unit by the insert fastener. In this case the insert fastener is a screw clamp, wherein a knob is provide on the exterior of said head unit and wherein said insert piece can be fastened and/or loosened by turning said knob tighter and/or looser.

The present invention is not limited to the preferred embodiments described here above, but such systems 1 and methods may be realized according to several variants without leaving the scope of the invention.

The present invention further relates to several preferred embodiments as defined in the below numbered paragraphs:
1.- System for testing the abrasion resistance of a glazed ceramic tile 2 comprising :
   - a base unit 3 for holding a glazed ceramic tile 2;
   - a head unit 7, adapted to hold an insert piece 8;
   wherein said system 1 is configured to move at least one between said base unit 3 and said head unit 7 to make said insert piece 8 contact said glazed ceramic tile 2, characterized in that said head unit 7 comprises an insert fastener 9 and wherein said insert piece 8 is removably held by said insert fastener 9.
2.- System according to numbered paragraph 1, characterized in that said base unit 3 is moveable with respect to said head unit 7 by means of a numerically controlled motor 20 at least along a first horizontal axis.
3.- System according to numbered paragraph 2, characterized in that said base unit 3 is moveable with respect to said head unit 7 along a second horizontal axis, said second horizontal axis being perpendicular to said first horizontal axis.
4.- System according to any of the preceding numbered paragraphs, characterized in that said base unit 3 comprises a bed 4 and one or more clamping and/or fastening mechanisms 5, which are configured to allow the fixation of a glazed ceramic tile 2.
5.- System according to any of the preceding numbered paragraphs, characterized in that the displacement and/or frequency of a movement of said base unit 3 is digitally and/or analogously controlled.
6.- System according to any of the preceding numbered paragraphs, characterized in that said base unit 3 is moveable with respect to said head unit 7 by means of a belt 23 driven mechanism.
7.- System according to any of the preceding numbered paragraphs, characterized in that said head unit 7 further comprises a load portion 11, which is configured to be provided with a removable load 12 and wherein said load 12 can be increased and/or decreased.
8.- System according to any of the preceding numbered paragraphs, characterized in that at least a portion of said head unit 7 is moveable with respect to said base unit 3 along a vertical axis.
9.- System according to numbered paragraph 8, characterized in that a position of said head unit 7 can be fixed along said vertical axis by means of a fastening mechanism and/or a pneumatically and/or electronically and/or hydraulically controlled system.
10.- System according to numbered paragraph 8 or 9, characterized in that said head unit 7 is moveable along said vertical axis by means of a digitally and/or analogously controlled motor 20.
11.- System according to any of the preceding numbered paragraphs, characterized in that said system 1 comprises a dosing unit 14, comprising a material inlet 15 which is configured to store and provide an amount of abrasive material 16.
12.- System according to numbered paragraph 11, characterized in that said dosing unit 14 further comprises a dosing channel 18 and a dosing outlet 19.
13.- System according to numbered paragraph 12, characterized in that said dosing channel 18 comprises a flexible and/or pliable portion.
14.- System according to any of numbered paragraphs 11 to 13, characterized in that said dosing unit 14 comprises a valve assembly 26 between said material inlet 15 and said dosing outlet 19.
15.- System according to numbered paragraph 14, characterized in that said valve assembly 26 is pneumatically and/or electronically and/or hydraulically controlled.
16.- System according to any of numbered paragraphs 11 to 15, characterized in that at least a part of said dosing unit 14 is attached to said head unit 7.
17.- System according to any of numbered paragraphs 11 to 16, characterized in that said dosing unit 14 comprises a hopper.
18.- System according to any of the preceding numbered paragraphs, characterized in that the material of said insert piece 8 has a Mohs hardness which is lower than the Mohs hardness of said abrasive material 16.
19.- System according to any of the preceding numbered paragraphs characterized in that the material of said insert piece 8 has a Mohs hardness which is lower than the Mohs hardness of the material of the surface of said glazed ceramic tile 2.
20.- System according to any of the preceding numbered paragraphs, characterized in that said abrasive material 16 comprises an aluminosilicate, preferably a feldspar, more preferably a sodium feldspar.
21.- System according to any of the preceding numbered paragraphs, characterized in that said abrasive material 16 has a grain size of less than 0.50 mm, preferably less than 0.15 mm.
22.- System according to any of the preceding numbered paragraphs, characterized in that said abrasive material 16 has a Mohs hardness of between 5.5 and 7.
23.- System according to any of the preceding numbered paragraphs, characterized in that said abrasive material 16 is essentially free of any lubricants.
24.- System according to any of the preceding numbered paragraphs, characterized in that said insert piece 8 is made of wood, preferably beech or plastic or metal.
25.- System according to any of the preceding numbered paragraphs, characterized in that said insert piece 8 comprises a contacting surface which has a surface area of between 1 and 20 square centimeters.
26.- System according to any of the preceding numbered paragraphs, characterized in that there is no rolling of the body of the insert piece 8 during a movement of the base unit 3 and the glazed ceramic tile 2 relative to the insert piece 8.
27.- System according to any of the preceding numbered paragraphs, characterized in that said glazed ceramic tile 2 is a flooring element.
28.- System according to any of the preceding numbered paragraphs characterized in that said glazed ceramic tile 2 comprises one of or a combination of the following flooring elements: HPL, DPL, CPL, LVT, SPC, WPC, ceramic tile.
29.- Method for testing the abrasion resistance of a glazed ceramic tile 2, by means of a system 1, wherein said system 1 is a system 1 according to any of numbered paragraphs 1 to 29, said method comprising the step of:
   - providing the glazed ceramic tile 2 to the base unit 3 of said system 1;
   - providing an insert piece 8 to the insert fastener 9 of the head unit 7 of said system 1;
   - providing a contact between said insert piece 8 and a surface of said glazed ceramic tile 2 and/or an abrasive material 16;
   - performing a relative movement between said base unit 3 and said head unit 7 for a first predefined number of movements;
   - visual inspection of the upper surface of said glazed ceramic 2 tile after said first predefined number of movements;
30.- Method according to numbered paragraph 29, wherein said system 1 is a system 1 according to any of the numbered paragraphs 7 to 28, characterized in that said method further comprises the step of providing a load 12 to said load portion 11 of said head unit 7.
31.- Method according to numbered paragraph 30, characterized in that said load 12 is transferred to said insert piece 8 onto said surface of said glazed ceramic tile 2 and/or onto said abrasive material 16.
32.- Method according to any of numbered paragraphs 29 to 31, wherein said system 1 is a system 1 according to any of the numbered paragraphs 12 to 28, characterized in that said method further comprises the step of providing said abrasive material 16 to said material inlet 15 of said dosing unit 14.
33.- Method according to numbered paragraph 32, characterized in that said method further comprises the step of providing said abrasive material 16 through said dosing channel 18 and through said dosing outlet 19 onto a surface of said glazed ceramic tile 2.
34.- Method according to any of the numbered paragraphs 29 to 33, characterized in that the method further comprises the step of exposing said glazed ceramic tile 2 to chemicals, e.g. cleaning agents.
35.- Method according to any of the numbered paragraphs 29 to 34, characterized in that said method comprises the step of treating the insert piece 8 before each test or before each series of tests. Preferably said treatment involves abrading a surface, provided for contacting said glazed ceramic tile, of said insert piece.
36.- Method according to any of the numbered paragraphs 29 to 35, characterized in that the method comprises the step of setting and controlling one or more testing parameters chosen from the following non-exhaustive list: movement speed, starting speed, time between movements, powder dispensing time, number of movements before powder dispensing, number of movements between two powder dispensing steps, total number of movements per cycle, ambient temperature, ambient humidity

## Claims

1. System for testing the abrasion resistance of a glazed ceramic tile (2) comprising :
- a base unit (3) for holding a glazed ceramic tile (2);
- a head unit (7), adapted to hold an insert piece (8);
wherein said system (1) is configured to move at least one between said base unit (3) and said head unit (7) to make said insert piece (8) contact said glazed ceramic tile (2), **characterized in that** said head unit (7) comprises an insert fastener (9) and wherein said insert piece (8) is removably held by said insert fastener (9).

2. System according to claim (1), **characterized in that** said base unit (3) is moveable with respect to said head unit (7) by means of a numerically controlled motor (20) at least along a first horizontal axis.

3. System according to any of the preceding claims, **characterized in that** said base unit (3) comprises a bed (4) and one or more clamping and/or fastening mechanisms (5), which are configured to allow the fixation of a glazed ceramic tile (2).

4. System according to any of the preceding claims, **characterized in that** said head unit (7) further comprises a load portion (11), which is configured to be provided with a removable load (12) and wherein said load (12) can be increased and/or decreased.

5. System according to any of the preceding claims, **characterized in that** said system (1) comprises a dosing unit (14), comprising a material inlet (15) which is configured to store and provide an amount of abrasive material (16).

6. System according to claim 6, **characterized in that** said dosing unit (14) further comprises a dosing channel (18) and a dosing outlet (19).

7. System according to any of the preceding claims **characterized in that** the material of said insert piece (8) has a Mohs hardness which is lower than the Mohs hardness of the material of the surface of said glazed ceramic tile (2).

8. System according to any of the preceding claims, **characterized in that** said abrasive material (16) comprises an aluminosilicate, preferably a feldspar, more preferably a sodium feldspar, and wherein said abrasive material (16) has a grain size of less than 0.50 mm, preferably less than 0.15 mm.

9. System according to any of the preceding claims, **characterized in that** said abrasive material (16) has a Mohs hardness of between 5.5 and 7.

10. System according to any of the preceding claims, **characterized in that** said abrasive material (16) is essentially free of any lubricants, and wherein there is no rolling of the body of the insert piece (8) during a movement of the base unit (3) and the glazed ceramic tile (2) relative to the insert piece (8).

11. Method for testing the abrasion resistance of a glazed ceramic tile (2), by means of a system (1), wherein said system 1 is a system (1) according to any the preceding claims, said method comprising the step of:
- providing the glazed ceramic tile (2) to the base unit (3) of said system (1);
providing an insert piece (8) to the insert fastener (9) of the head unit (7) of said system (1);
providing a contact between said insert piece 8 and a surface of said glazed ceramic tile (2) and/or an abrasive material (16);
performing a relative movement between said base unit (3) and said head unit (7) for a first predefined number of movements;
visual inspection of the upper surface of said glazed ceramic (2) tile after said first predefined number of movements.

12. Method according to claim 11, **characterized in that** said method further comprises the step of providing a load 12 to said load portion 11 of said head unit 7.

13. Method according to claim 12, **characterized in that** said load (12) is transferred to said insert piece (8) onto said surface of said glazed ceramic tile (2) and/or onto said abrasive material (16).

14. Method according to any of claims from 11 to 13, **characterized in that** said method further comprises the step of providing said abrasive material (16) to said material inlet (15) of said dosing unit (14).

15. Method according to claim 14, **characterized in that** said method further comprises the step of providing said abrasive material (16) through said dosing channel (18) and through said dosing outlet (19) onto a surface of said glazed ceramic tile (2).
